# EUROPÄISCHE PATENTSCHRIFT

(11) **EP 1 674 956 B1**
(45) Veröffentlichungstag und Bekanntmachung des Hinweises auf die Patenterteilung: **28.03.2012**
(21) Anmeldenummer: 05025338.4
(22) Anmeldetag: 21.11.2005
(51) Int. Cl.: G05B 19/05

(54) **Verfahren zur dynamischen Konfiguration einer Bedienoberfläche eines Funktionsbausteins**
Method for dynamically configuring a user interface of a functional block
Procédé de configuration dynamique d'une interface utilisateur d'un module fonctionnel

(30) Priorität: 18.12.2004 DE 102004061063
(43) Veröffentlichungstag der Anmeldung: 28.06.2006
(73) Patentinhaber: Bosch Rexroth AG, 70184 Stuttgart (DE)
(72) Erfinder: Köhler, Maik, Dr., 97788 Neuendorf (DE); Brunner, Reinhard, Dr., 01705 Freital (DE); Reckwell, Jens, 97816 Lohr am Main (DE); Goldbach, Klaus, 97816 Lohr am Main (DE); Schultze, Stephan, 97816 Lohr am Main (DE)

(56) Entgegenhaltungen:
- EP-A- 0 919 896
- EP-A1- 1 365 297
- DE-A1- 10 319 072
- GB-A- 2 345 360

## Beschreibung

Die vorliegende Erfindung betrifft ein Verfahren zur dynamischen Konfiguration einer Bedienoberfläche eines Funktionsbausteins einer Steuerplattform, ein entsprechendes Computerprogramm, ein Computerprogrammprodukt und ein Computersystem zur Durchführung des Verfahrens sowie eine entsprechende Bedienoberfläche eines Funktionsbausteins.

In sogenannten SPS (speicherprogrammierbare Steuerung)-Programmiersystem auf Basis der IEC 61131-3 gibt es sogenannte "Programmorganisationseinheiten", die progrämmiersprachlichen Strukturierungselementen entsprechen. Dabei wird zwischen Programmen, Funktionsbausteinen, Funktionen und weiteren Einheiten bspw. Ressourcen unterschieden. Jede Programmdrganisationseinheit hat gemäß IEC bestimmte spezifische Eigenschaften, die sie von anderen Programmorganisationseinheiten unterscheidet. Näheres dazu ist in DIN IEC EN 61131-3 beschrieben und festgelegt.

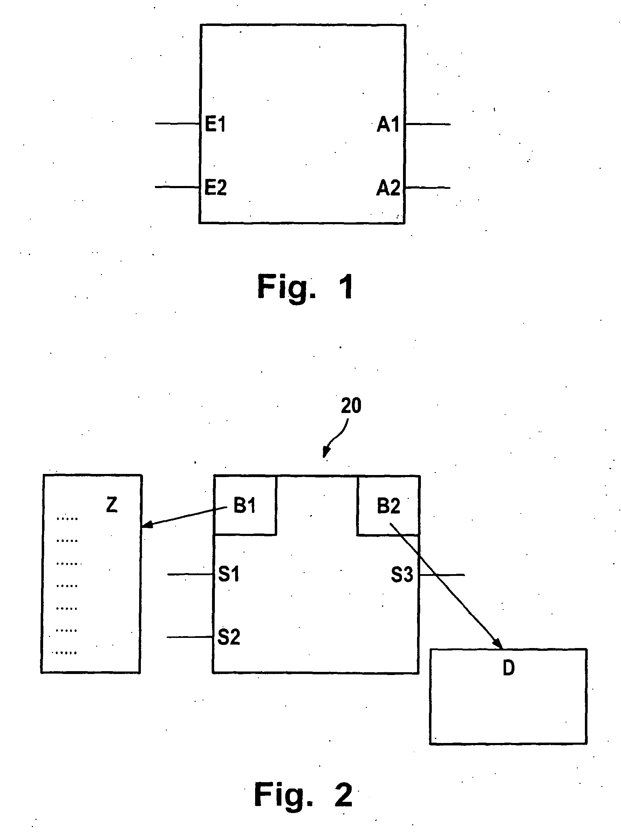

Für eine Programmierung bzw. Parametrierung von sogenannten Motion/Logic-Elementen dienen insbesondere die genannten Funktionsbausteine. Funktionsbausteine sind innerhalb von Programmen, anderen Funktionsbausteinen oder direkt aus einer Ressource aus aufrufbar. Funktionsbausteine verfügen über Eingangs- und Ausgangsparameter. Sie unterscheiden sich von Funktionen zum einen durch den sprachlichen Aufruf, d.h. die Syntax, mit welcher sie.aufgerufen werden können, und zum anderen dadurch, dass Funktionsbausteine im Gegensatz zu Funktionen interne Zustände haben können. Eine Belegung der Ausgänge eines Funktionsbausteins erfolgt demzufolge als eine Funktion der Eingangsbelegung und der internen Zustandsparameter des Funktionsparameters des Funktionsbausteins. Aus diesem Grund werden Funktionsbausteine instanziert, d.h. bei einer Programmorganisationseinheit, die einen spezifischen Funktionsbaustein verwenden soll, wird eine entsprechende Variable deklariert, der ein entsprechender spezifischer Funktionsbaustein-Typ zugeordnet wird. Ein Aufruf eines jeweiligen Funktionsbausteins erfolgt dabei in der Implementation. Dabei können unterschiedliche SPS-Programmiersprachen verwendet werden. Es wird hierbei zwischen graphischen Programmiersprachen und textuellen Programmiersprachen unterschieden. Bei graphischen Programmiersprachen gibt es bspw. eine sogenannte Funktionsbausteinsprache (FBS) und einen Kontaktplan (KOP). Unter der Gruppe der textuellen Programmiersprachen fällt bspw. eine Anweisungsliste und ein strukturierter Text. Eine Darstellung von Funktionsbausteinen in den graphischen Programmiersprachen ist innerhalb der IEC genormt. Eine derartige Darstellung ist in Figur 1 gezeigt. Dargestellt ist ein Funktionsbaustein 1 in Form eines Rechtecks. Das Rechteck, stellt eine Bedienoberfläche 2 des Funktionsbausteins 1 dar. Die Bedienoberfläche 2 weist in dem vorliegenden Beispiel insgesamt 4 Anschlüsse auf, dabei handelt es sich um zwei Eingangsanschlüsse E1, E2 und zwei Ausgangsanschlüsse A1, A2. Eingangs- und Ausgangsparameter, d.h. Variablen, werden an den entsprechend dargestellten Verbindungslinien angezeigt (hier nicht dargestellt). Des weiteren ist es auch möglich, Funktionsbausteine, logische Operationen oder Funktionen an die Ein- (E1, E2) bzw. Ausgänge (A1, A2) anzufügen. Die hier aufgezeigte Darstellung der Bedienoberfläche eines Funktionsbausteins weist eine Reihe von Nachteilen auf. Ein immer weiteres Zusammenrücken von Motion- und SPS-Funktionalität, eine sogenannte Motion-Logic-Integration, bedingt neben einer Anwendung herkömmlicher Funktionsbausteine einen Aufruf von unterschiedlichen sogenannten Motion-Bausteinen. Die Motion-Bausteine unterscheiden sich von herkömmlichen Funktionsbausteinen dadurch, dass insbesondere Bausteine zur Steuerung komplexer Bewegungsvorgänge meist eine sehr große Anzahl von Ein- und Ausgängen, d.h. von Anschlüssen, besitzen, wobei an diesen meist Variablen stehen, die zur Parametrierung vordefinierter Funktionalitäten dienen. Bei diesen vordefinierten Funktionalitäten kann es sich bspw. um Bewegung, Regelverhalten oder Kurvenscheiben-Charakteristiken handeln. Derzeit bekannte Motioncontrol-Motionen, sogenannte "Canned-Functions", haben in der in Figur 1 dargestellten Bedienoberfläche sehr viele motionbedingte Ein- und Ausgänge. Beispielhaft seien genannt eine virtuelle Leitachse, eine Kurvenscheibe und ein Registerregler. Eine virtuelle Leitachse könnte bspw. durch 25 Parameter, 15 Eingänge und 12 Ausgänge beschrieben werden, wodurch sich ein Funktionsbaustein mit insgesamt 52 Anschlüssen ergeben würde. Eine Kurvenscheibe umfasst z.B. 35 Parameter, 14 Eingänge und 17 Ausgänge, was zu einem Funktionsbaustein mit 66 Anschlüssen führen würde und ein Registerregler umfasst z.B. 25 Parameter, 4 Eingänge und 6 Ausgänge, woraus ein Funktionsbaustein mit 35 Anschlüssen resultieren würde. Würde ein derartiger Funktionsbaustein mittels einer, wie in Figur 1 gezeigten Bedienoberfläche ausgestattet sein, so wird diese Bedienoberfläche sehr unübersichtlich, da in der Regel nur einige der Vielzahl von Anschlüssen im SPS-Programm benötigt werden. Die Mehrzahl der genannten Anschlüsse bleibt üblicherweise unbeschaltet. Es handelt sich dabei entweder um feste Parameterwerte, die eine einmalige Anfangsinitialisierung benötigen oder es handelt sich um Ein- bzw. Ausgänge nicht genutzter Teilfunktionalitäten des betroffenen Funktionsbausteins.

Bisher sind einige SPS-Programmiersysteme bekannt, wie bspw. das sogenannte RSLogix-System, die aus den genannten Gründen bereits eine Möglichkeit zu einer reduzierten Darstellung komplexer Funktionsbausteine bieten. Hierbei werden auf der Bedienoberfläche Buttons "More" und "Less" vorgesehen, über welche sich der jeweilige Funktionsbaustein hinsichtlich seiner Anschlüsse vollständig oder reduziert anzeigen lässt. Darüber hinaus sind Schaltflächen vorgesehen, um darüber weitergehende Parametrierungen vornehmen zu können. Ein Nachteil bei den derzeit bekannten Systemen liegt insbesondere darin, dass es im wesentlichen nur zwei Skalierungsmöglichkeiten gibt. Das bedeutet, dass nur die Möglichkeit besteht zwischen vollständiger und reduzierter Darstellung des jeweiligen Funktionsbausteins zu wählen. Ferner kann ein Anwender des Funktionsbausteins die reduzierte Darstellung auf der Bedienoberfläche des Funktionsbausteins nicht selbst gestalten. Eine Beschaltung von sicherheitsrelevanten Ein- bzw. Ausgängen ist derzeit auch unautorisiert möglich. Das bedeutet, dass beliebige Programmierer eine Beschaltung vornehmen können.'Eine Parametrierung wird durch mehrere dafür vorgesehene Buttons separat gestartet. Damit ist es nicht möglich, in einer für klassische Motion-Steuerung gewohnten Art und Weise über Dialogketten, sogenannte Wizards, zu parametrieren.

Die Druckschrift DE 103 19 072 A1 betrifft ein Verfahren zum Erstellen eines eine Abfolge von Befehlen aufweisenden Anwenderprogramms für eine speicherprogrammierbare Steuerung, der Eingangssignale zugeführt werden und die durch Ausführung des Anwenderprogramms Ausgangssignale erzeugt, wobei die Befehle jeweils einen Funktionscode und dem Funktionscode zugeordnete Eingangsverweise aufweisen. Jeder Befehl liefert ein erstes Ergebnis der Ausführung des jeweiligen Funktionscodes, wobei weitere Ergebnisse der Ausführung des jeweiligen Funktionscodes in Speicherzellen abgelegt werden, wobei die Eingangsverweise auf ein Eingangssignal, auf einen anderen Befehl, auf eine Speicherzelle, auf einen Aktualwert oder auf einen Parameterwert verweisen und wobei eine Benutzeroberfläche zu einem Zeitpunkt jeweils zur Bearbeitung genau eines Befehls vorgesehen ist.

Ein Verfahren zum Erzeugen eines anwendungsspezifischen Funktionsbausteins für ein Automatisierungsgerät (AS) aus einem vordefinierten Funktionsbaustein ist aus der Druckschrift EP 1 365 297 A1 bekannt, wobei der vordefinierte Funktionsbaustein mindestens zwei mittels Softwarecode realisierte Teilfunktionen umfasst. Bei Ausführung des Verfahrens wird ein Blockdiagramm in ein Datenverarbeitungssystem geladen, wobei im Blockdiagramm jeder.Teilfunktion mindestens ein Darstellungsblock zugeordnet ist. Im Blockdiagramm werden diejenigen Darstellungsblöcke und/oder Verbindungslinien, welche zur Realisierung einer gewünschten Funktionalität des anwendungsspezifischen Funktionsbausteins nicht benötigt werden, mit jeweils einer Markierung versehen.

Vor dem Hintergrund der bekannten genannten Systeme schlägt die Erfindung nun ein Verfahren zur dynamischen Konfiguration einer Bedienoberfläche eines Funktionsbausteins einer Steuerplattform mit den Merkmalen gemäß Patentanspruch 1, ein Computerprogramm mit den Merkmalen des Patentanspruchs 11, ein Computerprogrammprodukt mit den Merkmalen des Patentanspruchs 12, ein Computerprogramm mit den Merkmalen des Patentanspruchs 13 sowie eine Bedienoberfläche mit den Merkmalen des Patentanspruchs 14 vor.

Gemäß Patentanspruch 1 wird ein Verfahren zur dynamischen Konfiguration einer Bedienoberfläche eines Funktionsbausteins einer Steuerplattform vorgesehen, wobei der Funktionsbaustein eine Mehrzahl von Anschlüssen zum Anschluss von Wirkungsgrößen aufweist, und bei dem Verfahren einsatzspezifisch dynamisch eine erste und eine zweite Gruppe von Anschlüssen aus der Mehrzahl von Anschlüssen ausgewählt, die Anschlüsse der ersten Gruppe auf der Bedienoberfläche angeordnet und angezeigt und die Anschlüsse der zweiten Gruppe auf der Bedienoberfläche ausgeblendet werden. Dabei weist die Bedienoberfläche eine Schaltfläche auf, über die ein Dialog initiiert wird.

In einer möglichen Ausführungsform des erfindungsgemäßen Verfahrens wird die Mehrzahl der Anschlüsse des Funktionsbausteins genau aus der ersten und der zweiten Gruppe der Anschlüsse gebildet.

In einer weiteren möglichen Ausführungsform des erfindungsgemäßen Verfahrens wird mindestens eine der Anschlüsse der zweiten Gruppe über mindestens ein über die Bedienoberfläche ausführbaren Dialog, einen sogenannten Wizard, parametriert.

Ferner ist es denkbar, in einer anderen Ausführungsform des vorliegenden Verfahrens, dass mindestens einer der Anschlüsse der zweiten Gruppe nicht beschaltet wird. Es kann dabei sein, dass dem mindestens einen Anschluss ein fester Parameterwert zugeordnet wird oder dieser Anschluss für einen besonderen Einsatz des Funktionsbausteins nicht genutzt wird.

Ferner ist es in einer anderen Ausführungsform des erfindungsgemäßen Verfahrens denkbar, dass die Anschlüsse der zweiten Gruppe an an diese Anschlüsse anzuschließenden Größen vorinitialisiert werden. Aufgrund dieser Vorinitialisierung sind die Anschlüsse demnach für den weiteren Einsatz des Funktionsbausteins nicht weiter zu betrachten und können demnach auf der Bedienoberfläche ausgeblendet werden. Bei den an die Anschlüsse anzuschließenden Größen kann es sich dabei um eine weitere Programmorganisationseinheit wie bspw. ein Programm, eine Funktion, einen weiteren Funktionsbaustein oder auch eine Ressource handeln. Es ist denkbar, die Anschlüsse der zweiten Gruppe an einer derartigen Verwendungsstelle der Funktionsbaustein-Instanz in der den Funktionsbaustein aufrufenden Programmorganisationseinheit zu initialisieren.

Bei komplexen, großen Funktionsbausteinen führt eine derartig durchgeführte dynamische Konfiguration der Bedienoberfläche zu einer wesentlich besseren Übersicht für einen Anwender. Dabei kann die Anzahl der sichtbaren Anschlüsse, d.h. der Ein-/Ausgänge des Funktionsbausteins auf das für einen spezifischen Einsatz notwendige Maß verringert werden. Die restlichen Anschlüsse, d.h. die Anschlüsse der zweiten Gruppe, werden dabei entweder über Dialoge parametriert, sind unbeschaltet oder sind gar nicht erreichbar. Gemäß dem erfindungsgemäßen Verfahren ist es denkbar bereits bei der Programmierung des Funktionsbausteins eine Vordefinition einer reduzierten Darstellung auf der Bedienoberfläche vorzunehmen, die dem Funktionsbaustein als eine Eigenschaft mitgegeben wird. Ferner kann dabei auch eine Initialisierung der Anschlüsse der zweiten Gruppe mit Auswirkung auf alle den Funktionsbaustein verwendenden Größen vorgenommen werden. Möglich ist auch, an der den Funktionsbaustein verwendenden Größe, d.h. an einer Verwendungsstelle der Funktionsbaustein-Instanz in einer entsprechenden den Funktionsbaustein aufrufenden Programmorganisationseinheit eine Konfiguration einer reduzierten Darstellung der Bedienoberfläche und eine Initialisierung der ausgeblendeten Anschlüsse vorzunehmen. Eine derart durchgeführte Konfiguration/Initialisierung der Funktionsbaustein-Instanz könnte dabei bspw. eine eventuell vordefinierte Konfiguration/Initialisierung des Funktionsbausteins überschreiben.

In einer weiteren denkbaren Ausführungsform des erfindungsgemäßen Verfahrens werden während eines Einsatzes des Funktionsbausteins Anschlüsse der ersten Gruppe wahlweise ausgeblendet und/oder Anschlüsse der zweiten Gruppe eingeblendet.

Ferner können die Anschlüsse der zweiten Gruppe bspw. über eine separate Anzeige, insbesondere einen Editor angezeigt werden.

In einer anderen Ausführungsform.des erfindungsgemäßen Verfahrens wird eine Umschalteinrichtung vorgesehen, über welche vordefinierte Anschlüsse der zweiten Gruppe wahlweise ein- und ausgeblendet werden können. Dabei wird die Umschalteinrichtung bspw. an den Funktionsbaustein aufrufenden Instanzen vorgesehen.

In einer weiteren möglichen Ausführungsform des erfindungsgemäßen Verfahrens wird die Auswahl der ersten und der zweiten Gruppe und/oder ein wahlweises Ein- und Ausblenden von Anschlüssen der ersten und/oder der zweiten Gruppe ganz oder teilweise nur autorisiert durchgeführt. Das bedeutet, dass nicht jeder Anwender eine Auswahl und/oder ein Ein- und Ausblenden von Anschlüssen vornehmen kann, sondern dazu autorisiert sein muss. Eine derartige Autorisierung kann mittels des Vergebens eines oder mehrerer Passwörter realisiert werden. Ferner ist es denkbar eine stufenweise Autorisierung einzurichten, das bedeutet zu unterscheiden zwischen dem Vornehmen eines vollständigen Ein- und Ausblendens oder nur eines teilweisen Ein- und Ausblendens der Anschlüsse. Dadurch kann die vollständige Anzeige und/oder Editierung per Passwort teilweise oder ganz verriegelt werden, so dass bspw. sicherheitsrelevante Parametrierungen auf diese Art geschützt werden können. Wird bspw. eine Reduzierung und Vorinitialisierung eines Funktionsbausteins mittels eines Passwortes geschützt, so kann seitens eines unbefugten zwar die Anzeige noch weiter reduziert werden, bereits ausgeblendete Anschlüsse aber nicht wieder eingeblendet werden, wodurch bspw. bestehende Sicherheitseinstellungen nicht verletzt werden können.

Mit Hilfe des erfindungsgemäßen Verfahrens verfügen Funktionsbausteine über eine kompakte und übersichtliche Bedienoberfläche, auch hinsichtlich der sie umgebenden Logik in einem Programmiersystem. Eine reduzierte Anzahl von zu verschaltender Funktionsbaustein-Ein-/Ausgänge ermöglicht einem Anwender eine einfachere Bedienung und verringert somit eine Fehlerwahrscheinlichkeit. Mittels des erfindungsgemäßen Verfahrens ist es darüber hinaus denkbar, dass ein Ersteller/Lieferant eines Funktionsbausteins bei der Auslieferung des Funktionsbausteins diesen bereits mit einer reduzierten graphischen Bedienoberfläche versieht, wobei die Bedienoberfläche nur die wesentlichen, in der Regel benötigten Anschlüsse anzeigt und die selten genutzten Anschlüsse ausblendet bzw. verdeckt. Es ist dabei denkbar, dass seitens des Anwenders beim Aufruf der Funktionsbaustein-Instanz die Anschlüsse des Funktionsbausteins auf der Bedienoberfläche weiter reduziert werden können. Ferner können sicherheitsrelevante Funktionsbausteinanschlüsse per Passwort verborgen und dadurch eine Fehlbeschaltung verhindert werden.

Ferner schlägt die Erfindung eine Bedienoberfläche'eines Funktionsbausteins einer Steuerplattform vor, wobei der Funktionsbaustein eine Mehrzahl von Anschlüssen zum Anschluss von Wirkungsgrößen aufweist. Die Bedienoberfläche zeigt eine einsatzspezifisch dynamisch auswählbare erste Gruppe von Anschlüssen aus der Mehrzahl von Anschlüssen in dynamisch festlegbarer Anordnung an, während sie eine zweite Gruppe aus der Mehrzahl von Anschlüssen ausblendet.

In einer möglichen Ausführungsform der erfindungsgemäßen Bedienoberfläche ist eine Schaltfläche vorgesehen, über welche ein Dialog initiierbar ist, über welchen mindestens einer der Anschlüsse der zweiten Gruppe parametrierbar ist.

In einer anderen möglichen Ausführungsform der erfindungsgemäßen Bedienoberfläche weist die Bedienoberfläche eine zweite Schaltfläche auf, über welche eine Anzeige aktivierbar ist, die die Anschlüsse der zweiten Gruppe anzeigt.

Ferner ist es denkbar, dass die Bedienoberfläche eine Umschalteinrichtung aufweist, über welche vordefinierte Anschlüsse der zweiten Gruppe wahlweise ein- und ausblendbar sind.

Ferner betrifft die vorliegende Erfindung ein Computerprogramm mit Programmcode, das bei Ablauf auf einem Computer oder einem Computersystem dazu geeignet ist, ein erfindungsgemäßes Verfahren durchzuführen.

Die Erfindung schlägt zudem ein Computerprogrammprodukt mit Programmcode vor, wobei der Programmcode auf einem computerlesbaren Datenträger gespeichert ist, um ein erfindungsgemäßes Verfahren durchzuführen, wenn das Computerprogramm auf einen Computer zur Ausführung kommt.

Darüber hinaus betrifft die vorliegende Erfindung ein Computersystem mit mindestens einer Speichereinheit, in der ein Computerprogramm mit Programmcode gespeichert ist, das bei Ablauf auf einen Computer oder auf einem Computersystem dazu geeignet ist, ein erfindungsgemäßes Verfahren durchzuführen.

Weitere Vorteile und Ausgestaltungen der Erfindung ergeben sich aus der folgenden Beschreibung und der beliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im folgenden unter Bezugnahme auf die Zeichnung ausführlich beschrieben.
- Figur 2: zeigt in schematischer Darstellung eine mögliche Ausführungsform eines Ablaufs eines erfindungsgemäßen Verfahrens.

Figur 2 zeigt eine Bedienoberfläche 20 eines Funktionsbausteins einer Steuerplattform. Der Funktionsbaustein weist eine Mehrzahl von Anschlüssen auf. Dabei wurden, wie hier dargestellt, drei Anschlüsse S1, S2 und S3 ausgewählt, auf der Bedienoberfläche 20 angeordnet und angezeigt. Ferner sind zwei Buttons B1 und B2 dargestellt, mittels derer weitere Konfigurationsmöglichkeiten der Bedienoberfläche 20 des Funktionsbausteins gewährleistet sind. Eine wie hier dargestellte Bedienoberfläche 20 kann bspw. bereits durch einen Programmierer des Funktionsbaustein-Typs vorgegeben bzw. vordefiniert sein. Dabei ist auch die Möglichkeit gegeben, dass einige der hier ausgeblendeten Anschlüsse des Funktionsbausteins bereits vorinitialisiert wurden. Durch die Buttons B1 und B2 wird nunmehr eine weitere Möglichkeit der Reduzierung der eingeblendeten Anschlüsse des Funktionsbausteins gegeben. Eine derartige weitere Gestaltungsmöglichkeit kann an der die Funktionsbaustein-Instanz aufrufenden Stelle bzw. Größe im Programmcode durch einen Anwender realisiert werden. Der potentielle Anwender kann nunmehr bspw. über einen Doppelklick auf den Button B1 eine Anzeige der derzeit ausgeblendeten Anschlüsse sichtbar machen. Über die Anzeige Z, die eine Liste der ausgeblendeten Anschlüsse umfasst, kann ein Anwender nunmehr unmittelbar eine Auswahl darüber treffen, welche der derzeit ausgeblendeten Anschlüsse sichtbar d.h. eingeblendet werden sollen. Darüber kann die Größe des Funktionsbausteins bestimmt werden. Dabei soll ein Ein-/ Ausblenden von Anschlüssen jederzeit seitens eines Anwenders widerrufbar sein. Ferner kann über einen Doppelklick auf den Button B2 eine Dialogkette D seitens des Anwenders geöffnet werden. Die Dialogkette D ermöglicht es einem Anwender eine Parametrierung derzeit nicht sichtbarer Anschlüsse interaktiv vorzunehmen. Um zu verhindern, dass jeder eine Neukonfiguration der Bedienoberfläche 20 des Funktionsbausteins vornehmen kann, kann bspw. durch einen Passwortschutz vorgesehen werden, dass nur dafür autorisierte Nutzer die Möglichkeit haben, Konfigurationen der Bedienoberfläche 20 vorzunehmen. Ein derartiger Passwortschutz soll dabei insbesondere gegen eine Editierung von Initialwerten und/oder gegen Aufblenden verdeckter Anschlüsse gegeben sein. Dabei kann das eingerichtete Passwort sowohl bei einer Parametrierung des Funktionsbaustein-Typs, d.h. bei dessen Erstellung, als auch bei der Verwendung, d.h. des Aufrufs, seiner Funktionsbaustein-Instanz eingebbar sein. Dadurch wird gewährleistet, dass sowohl bei der Erstellung des Funktionsbausteins, d.h. bei dessen Programmierung, wie auch bei dessen Verwendung eine unautorisierte Umkonfiguration der Bedienoberfläche 20 nicht möglich'ist. Mittels des erfindungsgemäßen Verfahrens ist eine anwenderfreundliche Eingabe nicht beschalteter, aber verwendeter Anschlüsse möglich. Ferner ist eine anwenderfreundliche Ausblendung nicht relevanter Anschlüsse besonders flexibel und einsatzspezifisch gegeben. Das erfindungsgemäße Verfahren ermöglicht einem Anwender flexible anwenderdefinierte Gestaltungsmöglichkeiten für den reduzierten Funktionsbaustein und die Beschaltung von verdeckten bzw. ausgeblendeten Anschlüssen. Ferner gibt es die Möglichkeit, über eine Schaltfläche eine Dialogkette, einen sogenannten Wizard, zu starten. Über das Vorsehen eines Passwortes wird auch der Schutz sicherheitsrelevanter Funktionsbaustein-Anschlüsse gewährleistet.

## Patentansprüche

1. Verfahren zur dynamischen Konfiguration einer Bedienoberfläche (20) eines Funktionsbausteins einer Steuerplattform, wobei der Funktionsbaustein eine Mehrzahl von Anschlüssen zum Anschluss von Wirkungsgrößen aufweist, bei dem einsatzspezifisch dynamisch eine erste und eine zweite Gruppe von Anschlüssen aus der Mehrzahl von Anschlüssen ausgewählt, die Anschlüsse (S1, S2, S3) der ersten Gruppe auf der Bedienoberfläche (20) angeordnet und angezeigt und die Anschlüsse der zweiten Gruppe auf der Bedienoberfläche (20) ausgeblendet werden,
**dadurch gekennzeichnet,**
**dass** die Bedienoberfläche (20) eine Schaltfläche (B1, B2) aufweist, über die ein Dialog initiiert wird.

2. Verfahren nach Anspruch 1, bei dem die Mehrzahl der Anschlüsse des Funktionsbausteins aus der ersten und zweiten Gruppe der Anschlüsse gebildet wird.

3. Verfahren nach einem der Ansprüche 1 oder 2, bei dem mindestens einer der Anschlüsse der zweiten Gruppe über mindestens einen über die Bedienoberfläche (20) ausführbaren Dialog (D) parametriert wird.

4. Verfahren nach einem der vorhergehenden Ansprüche, bei dem mindestens einer der Anschlüsse der zweiten Gruppe nicht beschaltet wird.

5. Verfahren nach einem der vorhergehenden Ansprüche, bei dem die Anschlüsse der zweiten Gruppe vorinitialisiert werden.

6. Verfahren nach einem der vorhergehenden Ansprüche, bei dem während eines Einsatzes des Funktionsbausteins Anschlüsse der ersten Gruppe wahlweise ausgeblendet und/oder Anschlüsse der zweiten Gruppe eingeblendet werden.

7. Verfahren nach einem der vorhergehenden Ansprüche, bei dem eine separate Anzeige (Z), insbesondere ein Editor vorgesehen wird, über die die Anschlüsse der zweiten Gruppe angezeigt werden können.

8. Verfahren nach einem der vorhergehenden Ansprüche, bei dem eine Umschalteinrichtung der Bedienoberfläche (20) vorgesehen ist, über welche vordefinierte Anschlüsse der zweiten Gruppe wahlweise ein- und ausgeblendet werden können.

9. Verfahren nach Anspruch 8, bei dem die Umschalteinrichtung an den Funktionsbaustein aufrufenden Instanzen vorgesehen wird.

10. Verfahren nach einem der vorhergehenden Ansprüchen, bei dem die Auswahl der ersten und der zweiten Gruppe und/oder ein wahlweises Ein- und Ausblenden von Anschlüssen der ersten und/oder der zweiten Gruppe ganz oder teilweise nur autorisiert, mittels eines Passwortes durchgeführt wird.

11. Computerprogramm mit Programmcode, das bei Ablauf auf einem Computer oder einem Computersystem dazu geeignet ist, ein Verfahren nach einem der Ansprüche 1 bis 10 durchzuführen.

12. Computerprogrammprodukt mit Programmcode, der auf einem computerlesbaren Datenträger gespeichert ist, um ein Verfahren nach einem der Ansprüche 1 bis 10 durchzuführen, wenn das Computerprogramm auf einem Computer zur Ausführung kommt.

13. Computersystem mit einer Speichereinheit, in der ein Computerprogramm mit Programmcode gespeichert ist, das bei Ablauf auf einem Computer oder einem Computersystem dazu geeignet ist, ein Verfahren nach einem der Ansprüche 1 bis 10 durchzuführen.

14. Bedienoberfläche eines Funktionsbausteins einer Steuerplattform, wobei der Funktionsbaustein eine Mehrzahl von Anschlüssen zum Anschluss von Wirkungsgrößen aufweist und die Bedienoberfläche (20) eine einsatzspezifisch dynamisch auswählbare erste Gruppe von Anschlüssen (S1, S2, S3) aus der Mehrzahl von Anschlüssen in dynamisch festlegbarer Anordnung anzeigt und eine zweite Gruppe aus der Mehrzahl von Anschlüssen ausblendet,
**dadurch gekennzeichnet,**
**dass** die Bedienoberfläche (20) eine Schaltfläche (B1, B2) aufweist, über die ein Dialog initiierbar ist.

15. Bedienoberfläche nach Anspruch 14, bei der über einen über eine erste Schaltfläche (B2) initiierbaren Dialog (D) mindestens eine der Anschlüsse der zweiten Gruppe parametrierbar ist.

16. Bedienoberfläche nach Anspruch 14 oder 15, bei der über eine zweite Schaltfläche (B1) eine Anzeige (Z) aktivierbar ist, die die Anschlüsse der zweiten Gruppe anzeigt.

17. Bedienoberfläche nach einem der Ansprüche 14 bis 16, die eine Umschalteinrichtung aufweist, über welche vordefinierte Anschlüsse der Gruppe wahlweise ein- und ausblendbar sind.

## Claims

1. Method for dynamically configuring a user interface (20) for a function block on a control platform, wherein the function block has a plurality of connections for connecting actuating quantities, in which a first and a second group of connections are dynamically selected from the plurality of connections in a manner specific to the application, the connections (S1, S2, S3) in the first group are arranged and displayed on the user interface (20), and the connections in the second group are hidden on the user interface (20),
**characterized**
**in that** the user interface (20) has a button (B1, B2) which is used to initiate a dialogue.

2. Method according to Claim 1, in which the plurality of connections of the function block are formed from the first and second groups of the connections.

3. Method according to one of Claims 1 and 2, in which at least one of the connections in the second group is parameterized using at least one dialogue (D) which can be conducted using the user interface (20).

4. Method according to one of the preceding claims, in which at least one of the connections in the second group is not used.

5. Method according to one of the preceding claims, in which the connections in the second group are pre-initialized.

6. Method according to one of the preceding claims, in which, during use of the function block, connections in the first group are selectively hidden and/or connections in the second group are shown.

7. Method according to one of the preceding claims, in which a separate display (Z), particularly an editor, is provided which can be used to display the connections in the second group.

8. Method according to one of the preceding claims, in which a changeover device on the user interface (20) is provided which can be used to selectively show and hide predefined connections in the second group.

9. Method according to Claim 8, in which the changeover device is provided on entities which call the function block.

10. Method according to one of the preceding claims, in which the first and second groups are selected and/or connections in the first and/or the second group are selectively shown and hidden in full or in part only with authorization, using a password.

11. Computer program having program code which, when running on a computer or a computer system, is suitable for performing a method according to one of Claims 1 to 10.

12. Computer program product having program code which is stored on a computer-readable data storage medium in order to perform a method according to one of Claims 1 to 10 when the computer program is executed on a computer.

13. Computer system having a memory unit which stores a computer program having program code which, when running on a computer or a computer system, is suitable for performing a method according to one of Claims 1 to 10.

14. User interface for a function block on a control platform, wherein the function block has a plurality of connections for connecting actuating quantities and the user interface (20) displays a first group of connections (S1, S2, S3), which is able to be dynamically selected in a manner specific to the application, from the plurality of connections in a dynamically stipulatable arrangement and hides a second group from the plurality of connections,
**characterized**
**in that** the user interface (20) has a button (B1, B2) which can be used to initiate a dialogue.

15. User interface according to Claim 14, in which a dialogue (D) which can be initiated using a first button (B2) can be used to parameterize at least one of the connections in the second group.

16. User interface according to Claim 14 or 15, in which a second button (B1) can be used to activate a display (Z) which displays the connections in the second group.

17. User interface according to one of Claims 14 to 16, which has a changeover device which can be used to selectively show and hide predefined connections in the group.

## Revendications

1. Procédé de configuration dynamique d'une interface d'utilisation (20) d'un composant fonctionnel d'une plate-forme de commande, le composant fonctionnel présentant une pluralité de bornes pour raccorder des grandeurs d'action, selon lequel un premier et un deuxième groupe de bornes parmi la pluralité de bornes sont sélectionnés de manière dynamique et spécifiquement à l'application, les bornes (S1, S2, S3) du premier groupe sont disposées et affichées sur l'interface d'utilisation (20) et les bornes du deuxième groupe sont masquées sur l'interface d'utilisation (20),
**caractérisé en ce**
**que** l'interface d'utilisation (20) présente un bouton de commande (B1, B2) par le biais duquel est initié un dialogue.

2. Procédé selon la revendication 1, selon lequel la pluralité de bornes du composant fonctionnel est formée du premier et du deuxième groupe de bornes.

3. Procédé selon l'une des revendications 1 ou 2, selon lequel au moins l'une des bornes du deuxième groupe est paramétrée par le biais d'au moins un dialogue (D) qui peut se dérouler par le biais de l'interface d'utilisation (20).

4. Procédé selon l'une des revendications précédentes, selon lequel au moins l'une des bornes du deuxième groupe n'est pas connectée.

5. Procédé selon l'une des revendications précédentes, selon lequel les bornes du deuxième groupe sont pré-initialisées.

6. Procédé selon l'une des revendications précédentes, selon lequel, pendant une utilisation du composant fonctionnel, les bornes du premier groupe sont, au choix, masquées et/ou les bornes du deuxième groupe sont affichées en superposition.

7. Procédé selon l'une des revendications précédentes, selon lequel il est prévu un afficheur séparé (Z), notamment un éditeur, par le biais duquel les bornes du deuxième groupe peuvent être affichées.

8. Procédé selon l'une des revendications précédentes, selon lequel il est prévu un dispositif de permutation de l'interface d'utilisation (20), par le biais duquel des bornes prédéfinies du deuxième groupe peuvent, au choix, être affichées en superposition et masquées.

9. Procédé selon la revendication 8, selon lequel le dispositif de permutation est prévu sur les instances qui invoquent le composant fonctionnel.

10. Procédé selon l'une des revendications précédentes, selon lequel la sélection du premier et du deuxième groupe et/ou un affichage en superposition et un masquage, au choix, de bornes du premier et/ou du deuxième groupe sont effectués totalement ou partiellement seulement en étant autorisés au moyen d'un mot de passe.

11. Programme informatique comprenant un code de programme qui, lorsqu'il est exécuté sur un ordinateur ou un système informatique, convient pour mettre en oeuvre un procédé selon l'une des revendications 1 à 10.

12. Produit de programme informatique comprenant un code de programme qui est enregistré sur un support de données lisible par ordinateur pour mettre en oeuvre un procédé selon l'une des revendications 1 à 10 lorsque le programme informatique est exécuté sur un ordinateur.

13. Système informatique comprenant une unité de mémoire dans laquelle est enregistré un programme informatique comprenant un code de programme qui, lorsqu'il est exécuté sur un ordinateur ou un système informatique, convient pour mettre en oeuvre un procédé selon l'une des revendications 1 à 10.

14. Interface d'utilisation d'un composant fonctionnel d'une plate-forme de commande, le composant fonctionnel présentant une pluralité de bornes pour raccorder des grandeurs d'action et l'interface d'utilisation (20) affichant, dans une disposition qui peut être définie dynamiquement, un premier groupe de bornes (S1, S2, S3), lequel peut être sélectionné de manière dynamique et spécifiquement à l'application parmi la pluralité de bornes, et masquant un deuxième groupe parmi la pluralité de bornes,
**caractérisée en ce**
**que** l'interface d'utilisation (20) présente un bouton de commande (B1, B2) par le biais duquel peut être initié un dialogue.

15. Interface d'utilisation selon la revendication 14, dans laquelle au moins l'une des bornes du deuxième groupe peut être paramétrée par le biais d'un dialogue (D) qui peut être initié par le biais d'un premier bouton de commande (B2).

16. Interface d'utilisation selon la revendication 14 ou 15, dans laquelle un afficheur (Z) qui affiche les bornes du deuxième groupe peut être activé par le biais d'un deuxième bouton de commande (B1).

17. Interface d'utilisation selon l'une des revendications 14 à 16, laquelle présente un dispositif de permutation par le biais duquel des bornes prédéfinies du groupe peuvent, au choix, être affichées en superposition et masquées.
